# EUROPEAN PATENT SPECIFICATION

(11) **EP 3 647 617 B1**
(45) Date of publication and mention of the grant of the patent: **01.06.2022**
(21) Application number: 18825337.1
(22) Date of filing: 20.06.2018
(51) Int. Cl.: F16C 41/00, B60B 35/02, F16C 19/18, B60B 27/00

(54) **ROLLING BEARING UNIT FOR SUPPORTING VEHICLE WHEEL**
KUGELLAGEREINHEIT ZUR STÜTZE EINES FAHRZEUGRADS
UNITÉ PALIER À ROULEMENT PERMETTANT DE PORTER UNE ROUE

(30) Priority: 26.06.2017 JP 2017123935
(43) Date of publication of application: 06.05.2020
(73) Proprietor: NSK Ltd., Tokyo 141-8560 (JP)
(72) Inventor: GUNJI, Daisuke, Fujisawa-shi Kanagawa 251-8501 (JP); SODA, Fumiaki, Fujisawa-shi Kanagawa 251-8501 (JP)
(74) Representative: Moreland, David
(86) International application number: PCT/JP2018/023476
(87) International publication number: WO 2019/004025

(56) References cited:
- WO-A1-2017/051881
- WO-A1-2017/051881
- WO-A1-2017/073646
- WO-A1-2017/073646
- JP-A- 2000 198 304
- JP-A- 2005 280 395
- US-A1- 2004 075 022

## Description

### TECHNICAL FIELD

The present invention relates to a rolling bearing unit for supporting a wheel of an automobile so as to be able to rotate freely with respect to the suspension.

### BACKGROUND ART

Rolling bearing units of the above kind are for example known from WO 2017/073646 A1 and WO 2017/051881 A1.

In the recent years, in order to improve kinetic performance and safety performance of an automobile, it is required to accurately collect the information regarding vehicle behavior and a road surface condition to use it for controlling an automobile. At the present, information regarding vehicle behavior is acquired by a G sensor (accelerometer), a yaw rate sensor, accelerator opening sensor, etc. provided on a vehicle. In order to acquire more accurate information, it is preferable to acquire information regarding working conditions (for example, pneumatic pressure) and movement state (for example, load) of tires and wheels that are close to the road surface. In order for this, for example, Japanese Patent No. 5,878,612 discloses technology in which a sensor is provided in the interior of a tire to estimate the road surface condition.

In order to operate the sensor provided in the interior of a tire, it is required to supply electric power to this sensor. Japanese Patent No. 4,627,108 and Japanese Patent No. 5,508,124 disclose technology in which a generator is provided in a tire to supply electric power that is generated by this generator to the sensor. However, as the entire part that constitute a tire rotates and there is no part that does not rotate, in order to constitute a generator, is it required to separately provide a mechanism that relatively displaces by utilizing the rotational motion of a wheel. Because of this, there are problems that the construction of a generator tends to be complicated and the cost increases, and it is also difficult to obtain sufficient electric power.

Japanese Patent No. 3,983,509 discloses to attach a generator to a rolling bearing unit for supporting wheel to supply electric power generated by this generator to a sensor. However, this technology uses the generator itself as a sensor so it is not intended to supply electric power that is generated by the generator to a sensor attached to a wheel or to use a generator having a large volume with sufficient electric power generation capacity. Therefore, it is not possible to apply such attachment structure of a generator as it is to the technology to supply electric power to a sensor that is attached to a wheel.

Japanese Patent No. 3,983,509 discloses attaching a wireless communication apparatus to a rolling bearing unit. However, this wireless communication apparatus is provided only to transmit the output signals of a generator wirelessly, and it is not intended to wirelessly communicate the output signals of a sensor that rotates with a wheel. Therefore, it is also impossible to use the attachment structure of this wireless communication apparatus to the technology that wirelessly transmits the output signals of a sensor that rotates with a wheel.

In the rolling bearing unit for supporting wheel, there is a problem in which the dimension in the axial direction is restricted in relation to members that are provided in its circumference so the space for installing a generator and wireless communication apparatus is limited.

### [Citation List]

### [Patent Literature]

[Patent Literature 1] Japanese Patent No. 5,878,612
[Patent Literature 2] Japanese Patent No. 4,627,108
[Patent Literature 3] Japanese Patent No. 5,508,124
[Patent Literature 4] Japanese Patent No. 3,983,509

### SUMMARY OF INVENTION

### [Technical Problem]

In consideration of the situation above, it is the object of the present invention to provide a rolling bearing unit for supporting wheel that is able to suppress increase in the dimension in the axial direction due to the installation of a generator and a wireless communication apparatus to a minimum, supply sufficient electric power to a sensor that is attached to a wheel, and wirelessly transmit output signals of a sensor that rotates with a wheel to an electronic apparatus on the vehicle body side.

### [Solution to Problem]

The rolling bearing unit for supporting wheel of the present invention is for supporting a wheel with respect to a suspension so as to be able to rotate freely, and it comprises a bearing portion, a generator, and a wireless communication apparatus.

The bearing portion has an outer ring, a hub, and a plurality of rolling elements. The outer ring has an outer ring raceway on an inner peripheral surface thereof, and it is supported by the suspension so as not to rotate. The hub is provided inside in a radial direction of the outer ring so as to be coaxial with the outer ring, and has an inner ring raceway in a portion of an outer peripheral surface thereof that is opposed to the outer ring raceway, and the wheel is fixed thereto so the hub rotates with the wheel. The rolling elements are constructed by balls or rollers such as tapered rollers, cylindrical rollers, and spherical rollers, and are provided between the outer ring raceway and the inner ring raceway so as to be able to roll freely.

The generator has a stator and a rotor that are coaxially provided to each other, and it generates electricity based on relative rotation of the stator and the rotor.

The wireless communication apparatus performs wireless communication with an electronic apparatus that is placed on a vehicle body side.

Especially, in the rolling bearing unit for supporting wheel of the present invention, the hub comprises an inner recessed portion on an inner diameter side of an inside portion in an axial direction thereof and a through-hole that passes through a center portion of the hub in the axial direction. The inner recessed portion comprises a cylindrical fitting surface section that is coaxial with a center axis of the hub on an inner peripheral surface thereof, and an opening of the through-hole on a bottom surface thereof.

A hollow cylindrical supporting member having a cylindrical guide surface section on an outer peripheral surface thereof is supported and fixed inside the inner recessed portion in a state where the guide surface section is fitted to the fitting surface section.

The rotor is constructed by an armature comprising a coil, and is fixed to an inside portion in the axial direction of the supporting member so as to be coaxial with the supporting member.

The wireless communication apparatus is supported by the hub, and is placed inside in the radial direction of the supporting member.

In the present invention, wiring is provided so as to pass through the through-hole that is open on the bottom surface of the inner recessed portion, and is able to supply electric power to a sensor that is attached to a wheel from the rotor that is placed in the inside portion in the axial direction of the hub, as well as to transmit output signals of the sensor to the wireless communication apparatus that is placed inward in the axial direction of the hub.

The hub may further comprise an outer recessed portion on an inner diameter side of an outside portion in the axial direction, as well as a partition wall section between the outer recessed portion and the inner recessed portion. In this case, the through-hole is provided in the partition wall section.

The rolling bearing unit for supporting wheel of the present invention may comprise a battery for storing electric power that is generated by the generator that is placed inside the outer recessed portion.

The rolling bearing unit for supporting wheel of the present invention further comprises a cover that covers an inside end opening in the axial direction of the outer ring, and it is also possible to make at least a portion of the cover that is opposite to the wireless communication apparatus in the axial direction formed by a material having a radio wave transmitting property such as ABS (acrylonitrile butadiene styrene copolymer), AS (acrylonitrile styrene copolymer) resin.

In the rolling bearing unit for supporting wheel of the present invention, it is also possible to face the stator and the rotor via an air gap (radial gap) in the radial direction so as to make the generator to be a radial gap type generator.

Inside a plurality of the coils that constitute the rotor, an iron core or core may be arranged, or it is also possible to make the inside of the coils hollow without arranging the iron core or core.

Further, the generator may be constructed by a single-phase generator or a three-phase generator.

### [Advantageous Effects of Invention]

With the present invention, it is possible to suppress increase in the dimension in the axial direction due to the installation of a generator and a wireless communication apparatus to a minimum while supplying sufficient electric power to the sensor that is attached to a wheel, as well as wirelessly transmit output signals of the sensor that rotates with the wheel to an electronic apparatus on the vehicle body side.

### BRIEF DESCRIPTION OF THE DRAWINGS

FIG. 1 is a perspective view of a wheel supporting mechanism that supports a wheel with respect to a suspension by a rolling bearing unit for supporting wheel of the first example of an embodiment as seen from outside in the axial direction.
FIG. 2 is a perspective view of the wheel supporting mechanism illustrated in FIG. 1 as seen from inside in the axial direction.
FIG. 3 is a cross-sectional view of the wheel supporting mechanism illustrated in FIG. 1.
FIG. 4 is a cross-sectional view of the rolling bearing unit for supporting wheel that has been removed from the wheel supporting mechanism illustrated in FIG. 1.
FIG. 5 is a perspective view representing an exploded view of part of the rolling bearing unit for supporting wheel illustrated in FIG. 4.
FIG. 6 is a cross-sectional view representing a middle state of assembling a supporting member to a bearing portion of the rolling bearing unit for supporting wheel illustrated in FIG. 4.

### DESCRIPTION OF EMBODIMENTS

### [Example 1]

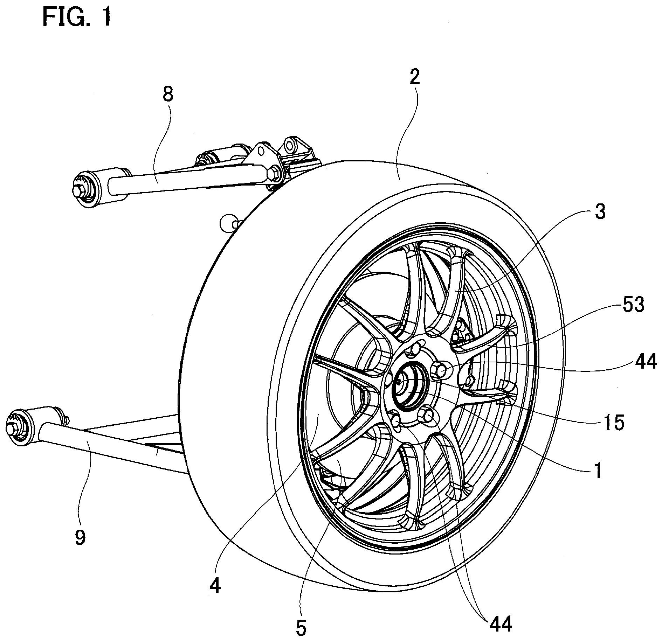

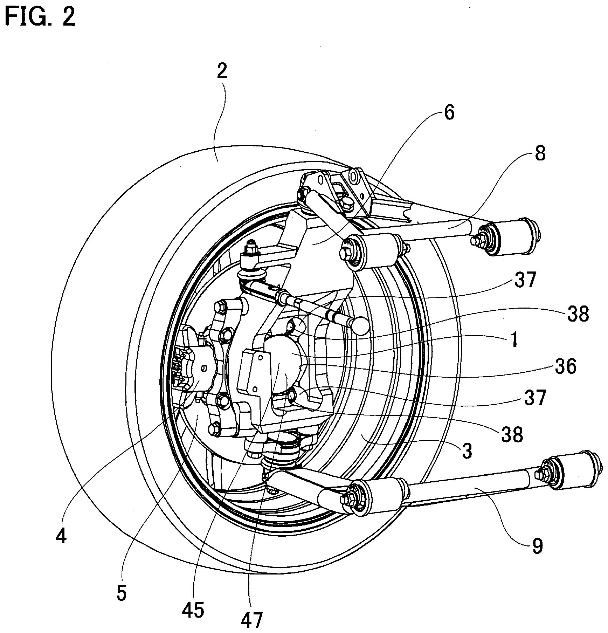

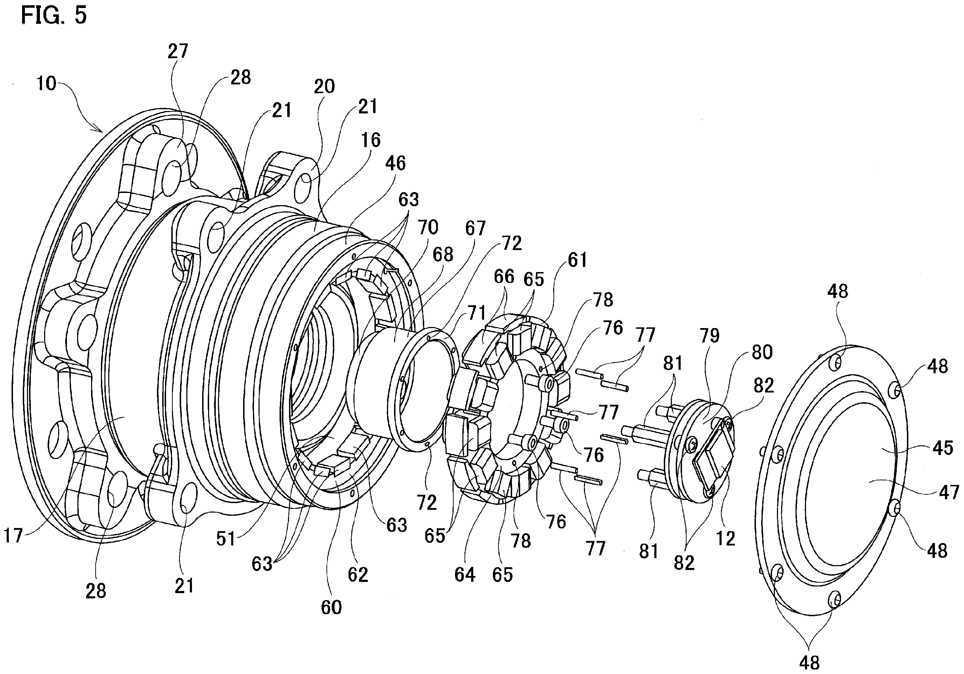

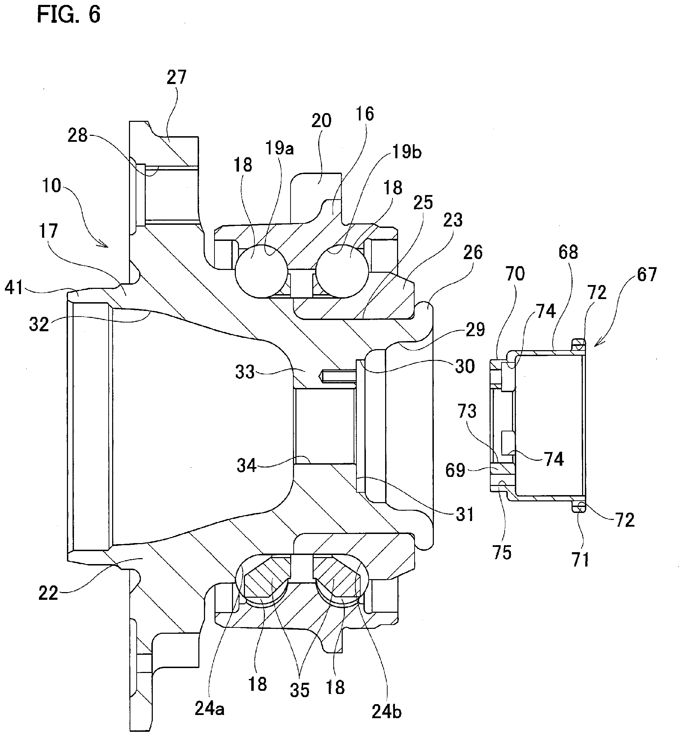

The first example of an embodiment of the present invention will be explained in reference to FIG.1 through FIG. 6. The rolling bearing unit 1 for supporting wheel of this example is for a driving wheel and it supports a tire 2 and a wheel 3 of an automobile wheel, as well as a rotor 5 of a disc brake device 4 as a braking device so as to be able to rotate freely with respect to a knuckle 6 of a suspension device. In the illustrated construction, the knuckle 6 is supported by an upper arm 8 and a lower arm 9 that are supported so as to be able to swing and displace with respect to the vehicle body 7.

The rolling bearing unit 1 for supporting wheel comprises a bearing portion 10 having a bearing function, a generator 11 having an electric power generation function, a wireless communication apparatus 12 having a wireless communication function, a battery 13 having an electric power storage function, an interface circuit 14 that processes the sensor signals, and a connector 15.

The bearing portion 10 comprises an outer ring 16 which is a stationary ring, a hub 17 which is a rotating ring, and a plurality of balls 18 which are rolling elements, and it supports the tire 2 and the wheel 3 so as to rotate freely with respect to the knuckle 6.

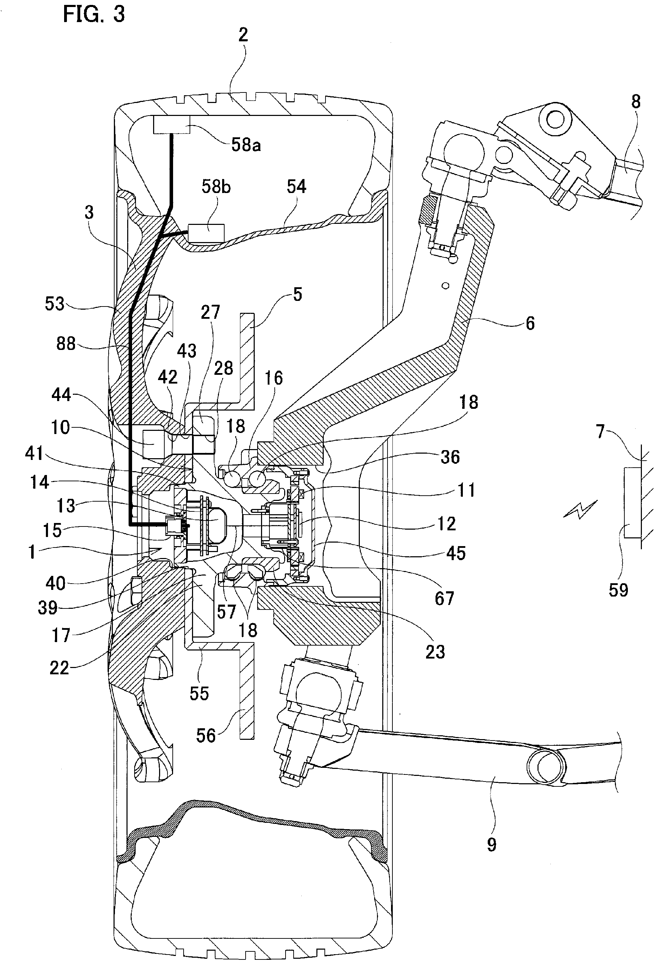

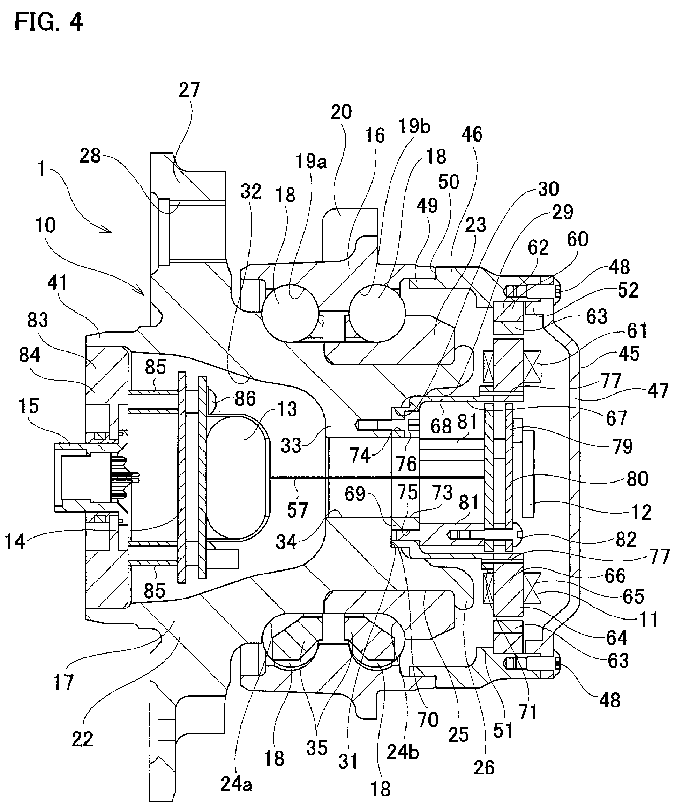

The outer ring 16 is substantially annular as a whole, and the outer ring comprises double-row outer ring raceways 19a, 19b on the inner peripheral surface and a stationary flange 20 in the middle portion in the axial direction of the outer peripheral surface. The stationary flange 20 comprises a plurality of installation holes 21 that are screw holes or through-holes passing through in the axial direction. Here, "inside" with respect to the axial direction corresponds to the right side in FIG. 3 and FIG. 4 that is the center side in the width direction of a vehicle in a state where the rolling bearing unit 1 for supporting wheel is assembled to a vehicle, and "outside" with respect to the axial direction corresponds to the left side in FIG. 3 and FIG. 4 that is outside in the width direction of the vehicle.

The hub 17 comprises a hub wheel 22 and an inner ring 23. The hub wheel 22 comprises a small-diameter stepped portion 25 in a portion near the inside end in the axial direction of the outer peripheral surface. The inner ring 23 is fitted and fixed to the stepped portion 25 of the hub wheel 22. The inside end surface in the axial direction of the inner ring 23 is held by a crimped portion 26 that is formed by plastically deforming the inside end portion in the axial direction of the hub wheel 22 outward in the radial direction. The hub 17 has inner ring raceways 24a, 24b in portions of the outer peripheral surface that are respectively opposite to the outer ring raceways 19a, 19b, and is supported inside in the radial direction of the outer ring 16 so as to be coaxial with the outer ring 16. The inner ring raceway 24a as the outside row in the axial direction is formed in the middle portion in the axial direction of the outer peripheral surface of the hub wheel 22. The inner ring raceway 24b as the inside row in the axial direction is formed in the outer peripheral surface of the inner ring 23.

The hub wheel 22 comprises a rotating side flange 27 for supporting a wheel in a portion protruding outward in the axial direction than the outer end opening portion in the axial direction of the outer ring 16. The rotating side flange 27 comprises a plurality of coupling holes 28 that are female screw holes passing through in the axial direction.

In this example, the hub wheel 22 comprises an inner recessed portion 29, that is recessed outward in the axial direction, on the inner diameter side of the inside portion in the axial direction that is placed inward in the radial direction of the crimped portion 26. The inner recessed portion 29 has a substantially trapezoidal cross section in which the inner diameter dimension becomes gradually larger towards inward in the axial direction. The inner recessed portion 29 comprises a fitting surface section (spigot jointing portion) 30. The inner recessed portion 29 comprises a bottom surface 31 that is a planar surface existing on a virtual plane that is orthogonal to the center axis of the hub 17.

The hub wheel 22 comprises an outer recessed portion 32 that is recessed toward inward in the axial direction on the inner diameter side of the outside portion in the axial direction that locates inward in the radial direction of the rotating side flange 27. The outer recessed portion 32 has a substantially trapezoidal cross section in which the inner diameter dimension becomes larger towards outward in the axial direction.

The hub wheel 22 comprises a partition wall section 33 in the center portion in the axial direction as well as between the inner recessed portion 29 and the outer recessed portion 32. The partition wall section 33 comprises a through-hole 34 in the center portion that passes through the partition wall section 33 in the axial direction. The inside portion in the axial direction of the through-hole 34 is open in the bottom surface 31 of the inner recessed portion 29 and the outside portion in the axial direction of the through-hole 34 is open in the bottom surface of the outer recessed portion 32.

In this example, the bearing portion 10 comprises a plurality of balls 18 as rolling elements. Each ball 18 is placed between the outer ring raceways 19a, 19b and inner ring raceways 24a, 24b so as to roll freely in a state where each ball is retained in a cage 35. In the illustrated example, preload is applied to each ball 18 together with a back-to-back type contact angle, and each dimension such as diameter, pitch circle diameter and the degree of the contact angle is set to be the same as each other among balls 18 of both rows. However, it is possible to employ construction in which the volume of the room of the outer recessed portion is reserved larger by making the diameter of the balls of the ball row on the inner side (inside in the axial direction) larger than the diameter of the balls of the ball row on the outer side (outside in the axial direction), and by making the pitch circle diameter of the ball row on the outer side larger than the pitch circle diameter of the ball row on the inner side.

The outer ring 16 is supported by and fixed to the knuckle 6. Specifically, a portion of the outer ring 16 which is provided more inside in the axial direction than the stationary flange 20 (knuckle-side pilot portion) inserts through a circular support hole formed on the knuckle 6 and the inside surface in the axial direction of the stationary flange 20 comes in contact with the outside end surface in the axial direction of the knuckle 6. In this state, the outer ring 16 is supported by and fixed to the knuckle 6 with a plurality of fastening members (bolts) that pass through and are secured to a plurality of installation holes 21 of the stationary flange 20 and a plurality of knuckle-side installation holes 37 provided on the knuckle 6, that are provided in locations so as to coincide with each other.

The wheel 3 and the rotor 5 of the disc brake device 4 of the vehicle wheel are fixed to the rotating side flange 27 that is provided on the hub 17 which is a rotating ring. Specifically, a positioning cylindrical portion 41 which is called a pilot portion provided on the outside end portion in the axial direction of the hub wheel 22 is sequentially inserted (fitted inside) to the rotor center hole 39 that is provided in the center portion of the rotor 5 and the wheel center hole 40 that is provided in the center portion of the wheel 3. Because of this, the positions of the wheel 3 and the rotor 5 in the radial direction are determined. In this state, the wheel 3 and the rotor 5 are fixed to the outside surface in the axial direction of the rotating side flange 27 by fastening members 44, the fastening members 44 respectively passing through a plurality of wheel coupling holes 42 provided on the wheel 3 and a plurality of rotor coupling holes 43 provided on the rotor 5, which are located in positions that are aligned with each other, and screwed into and fastened to the coupling holes 28 of the rotating side flange 27.

A seal ring that is not illustrated exists between the inner peripheral surface of the outer ring 16 and the outer peripheral surface of the hub 17 to seal the opening on the outside end in the axial direction in the interior space where the balls 18 are placed. A bottomed cylindrical cover 45 seals the inside end opening in the axial direction of the outer ring 16. Due to this, it is prevented that the grease enclosed in the interior space where the balls 18 are provided does not leak to the external space or foreign matter that exists in the external space enters the interior space.

The cover 45 comprises a cylindrical fitting cylindrical portion 46 and a disc-shaped bottom plate portion 47. The fitting cylindrical portion 46 and the bottom plate portion 47 are fastened by a plurality of bolts 48. A small diameter portion 49 that is provided on the outside portion in the axial direction of the fitting cylindrical portion 46 of the cover 45 is fitted and fixed to the inside portion in the axial direction of the outer ring 16. The stepped surface 50, which is provided in the middle portion in the axial direction of the fitting cylindrical portion 46, faces the outside in the axial direction and comes in contact with the inside end surface in the axial direction of the outer ring 16. Due to this, the position of the cover 45 in the axial direction with respect to the outer ring 16 is determined. By doing this, the cover 45 is attached to the outer ring 16.

The fitting cylindrical portion 46 is made of metal, and it comprises an inward flange 51 that protrudes inward in the radial direction in the middle portion in the axial direction of the inner peripheral surface. The bottom plate portion 47 is made of resin such as ABS resin or AS resin which has a superior radio wave transmitting property. However, when the present invention is carried out, it is also possible employ a cover construction in which the cover is made of metal as a whole and provides with a through-hole in a portion of the cover that is opposite in the axial direction to the antenna of the wireless communication apparatus, and the through-hole is sealed by resin and the like having a radio wave transmitting property. The small cylindrical portion 52 that is provided in the outer diameter side of the outside surface in the axial direction of the bottom plate portion 47 is fitted inside the fitting cylindrical portion 46, and due to this, the position in relation to the radial direction of the bottom plate portion 47 with respect to the fitting cylindrical portion 46 is determined. It is also possible to improve the water proof performance of the cover 45 by a seal member provided in the portion where the fitting cylindrical portion 46 and the outer diameter 16 come in contact with each other.

In this example, the wheel 3 that is attached to the hub 17 is made of aluminum alloy, and it comprises a disc portion 53 which is joined and fastened to the outside surface in the axial direction of the rotating side flange 27 and a cylindrical rim portion 54 which is provided in the perimeter edge section of the disc portion 53. The tire 2 is supported by and fastened to around the rim portion 54. The rotor 5 has a crank-shaped cross section and is circular ring-shaped as a whole. The rotor 5 comprises a hat portion 55 that is joined and fastened to the outside surface in the axial direction of the rotating side flange 27, as well as a sliding portion 56, which is sandwiched between a pair of pads that are supported by a caliper of the disc brake device 4 when brake is operated, in a portion on the outer diameter side.

In the rolling bearing unit 1 for supporting wheel of this example, a generator 11, a wireless communication apparatus 12, a battery 13, an interface circuit 14, and a connecter 15 are mounted to the bearing portion 10.

In this example, the generator 11 that utilizes the relative rotation of the outer ring 16 and the hub 17 to generate electricity and the wireless communication apparatus 12 are placed in the space which exists inward in the axial direction of the hub 17 of the bearing portion 10. On the other hand, the battery 13, the interface circuit 14, and the connector 15 are placed inside the outer recessed portion 32 of the hub 17 where a large storage space is secured. The generator 11 and the wireless communication apparatus 12, the battery 13, the interface circuit 14, and the connector 15 are electrically connected by way of the wiring 57 which passes through the through-hole 34 that is provided in the partition wall section 33 of the hub 17. The rolling bearing unit 1 for supporting wheel supply electric power that is generated by the generator 11 to the wireless communication apparatus 12 and the interface circuit 14 after temporarily stored in the battery 13, and supply electric power to the sensor (tire-side sensor 58a, wheel-side sensor 58b) that is provided on the wheel side by way of the connector 15. The rolling bearing unit 1 for supporting wheel transmits the output signals of the sensors 58a, 58b to the interface circuit 14 through the connector 15 and wirelessly transmits the signals to a calculation apparatus 59 that is placed on the vehicle body 7 side through the wireless communication apparatus 12.

In this example, the generator 11 and the wireless communication apparatus 12 are placed to be superimposed in the radial direction by using a supporting member 67 that is fixed to the inside of the inner recessed portion 29 of the hub 17. By doing this, the generator 11 and the wireless communication apparatus 12 are efficiently placed in the limited space that exists inward in the axial direction of the hub 17 so as to prevent the axial dimension of the rolling bearing unit 1 for supporting wheel to be needlessly increased.

In this example, the electric power generation capacity of the generator 11 is intended to be increased by increasing the concentricity of the supporting member 67 with respect to the hub 17 as well as the concentricity of the rotor 61 of the generator 11 with respect to the supporting member 67. The structure of the generator 11, the wireless communication apparatus 12 and the supporting member 67 that are used in this example, as well as the mounting structure of those are described below.

The generator 11 is a magnet type AC generator that generates single-phase or three-phase alternating current. The generator 11 comprises a stator 60 and a rotor 61 that are placed to be coaxial with each other, and generates electric power to be supplied to the sensors 58a, 58b that are provided on the wheel side. In this example, the generator 11 is placed in a space inward in the axial direction of the hub 17 so as to be able to take out the relative rotation of the outer ring 16 and the hub 17 with ease in order to utilize the relative rotation of the outer ring 16 and the hub 17.

The stator 60 is fitted and fixed inside the inner peripheral surface of the fitting cylindrical portion 46 that is fixed to the outer ring 16. The stator 60 comprises a stator core 62 comprising laminate of cylindrical magnetic steel plates, and a plurality of permanent magnets 63 that are supported in plural portions in the circumferential direction of the inner peripheral surface of the stator core 62. Each of the permanent magnets 63 has a rectangular plate shape and is magnetized in the radial direction, and the direction of magnetizing is to be the opposite direction against each other among permanent magnets 63 that are adjacent to each other in the circumferential direction. As such, in the inner peripheral surface of the stator 60, S pole and N pole are alternately and uniformly spaced in relation to the circumferential direction. The stator core 62 comes in contact with the inside surface in the axial direction of the inward flange 51 that is provided in the inner peripheral surface of the fitting cylindrical portion 46 so as to determine the position of the stator core 62 in relation to the axial direction. Here, it is also possible to directly fix the stator 60 to the outer ring 16.

The rotor 61 is supported by the hub 17 by way of a supporting member 67. The rotor 61 is an armature which comprises a substantially annular rotor core 64 constructed by laminate of a plurality of electromagnetic steel sheets and a plurality coils 65. The rotor core 64 comprises a plurality of teeth (salient poles) 66 that are placed radially outward. The coil 65 is wound around the teeth 66 of the rotor core 64.

In this example, the rotor 61 utilizes the supporting member 67 to be supported by and fastened to the inside end portion in the axial direction of the hub 17 in order to effectively use the limited space which exists inward in the axial direction of the hub 17. The supporting member 67 comprises a fixed cylindrical portion 68 having a stepped cylindrical shape and a bottom portion 69 that covers the outside end opening in the axial direction of the fixed cylindrical portion 68.

The fixed cylindrical portion 68 comprises a cylindrical guide surface section 70 in the outer peripheral surface of the outside end portion in the axial direction. The cylindrical guide surface section 70 has a diameter smaller than a portion that is adjacent to the inside in the axial direction and is coaxial with the center axis of the supporting member 67. The fixed cylindrical portion 68 comprises an outward flange 71 that protrudes outward in the radial direction in the inside end portion in the axial direction. The outward flange 71 comprises flange-side coupling holes 72 that pass through in the axial direction in a plurality of portions in the circumferential direction. On the other hand, the bottom portion 69 comprises an insertion hole 73, a stepped hole 74, and an installation hole 75 which pass through the bottom portion 69 in the axial direction. The insertion hole 73 is for inserting the wiring 57, and is provided in a portion of the bottom portion 69 that coincides with the through-hole 34 of the partition wall section 33 in a state where the supporting member 67 is supported by and fixed to the hub 17. The stepped hole 74 and the installation hole 75 are provided in positions of the bottom portion 69 that coincide with the bottom surface 31 of the inner recessed portion 29 which is deviated from the through-hole 34 in a state where the supporting member 67 is supported by and fixed to the hub 17. In this example, the outside end surface in the axial direction (outside surface in the axial direction of the bottom portion 69) of the supporting member 67 and the inside surface in the axial direction of the outward flange 71 are flat surfaces which exist on a virtual plane that is orthogonal to the center axis of the supporting member 67.

The outside end surface in the axial direction of the supporting member 67 comes in contact with the bottom surface 31 of the inner recessed portion 29, and the guide surface section 70 of the supporting member 67 is fitted and fixed inside the fitting surface section 30 of the inner recessed portion 29 without looseness. Due to this, the supporting member 67 is supported by and fastened to the hub 17. The mounting bolt 76 that passes through the stepped hole 74 of the bottom portion 69 is screwed in and fastened to the bottom surface 31 of the inner recessed portion 29. The supporting member 67 is supported by and fastened to the hub 17 in this manner, each of the concentricity of the supporting member 67 regarding the hub 17 and the mounting accuracy with respect to the axial direction of the supporting member 67 regarding the hub 17 becomes high.

In this example, the rotor core 64 of the rotor 61 is fixed to the flat planar inside surface in the axial direction of the outward flange 71 of the supporting member 67 by fastening members 77 such as a plurality of spring pins. More specifically, the outside surface in the axial direction of the inner diameter portion of the rotor core 64 comes in contact with the inside surface in the axial direction of the outward flange 71 and the phases in the circumferential direction of the rotor-core-side coupling holes 78 that exist in a plurality of portions in the circumferential direction of the inner diameter portion of the rotor core 64 and the flange-side coupling holes 72 of the outward flange 71 are matched. In this state, the fastening members 77 are pressure-fitted to both of the rotor-core-side coupling holes 78 and the flange-side coupling holes 72. By doing this, the rotor 61 is placed inward in the axial direction of the crimped portion 26 of the hub 17 in a state where the rotor 61 is supported by and fastened to the supporting member 67. As the rotor 61 is supported by and fastened to the supporting member 67 like this, the concentricity of the hub 17 and the rotor 61 becomes high. Regarding the rotor-core-side coupling holes 78 and the flange-side coupling holes 72, they may be processed separately as long as they can be processed with high accuracy in relation to the positions in the radial direction or the rotor core 64 and the supporting member 67 may be placed coaxially placed and processed simultaneously.

Regarding the mounting structure of the rotor core to the supporting member, it is possible to employ construction in which part of the rotor core is fitted into the outward flange of the supporting member instead of the mounting structure using a fastening member such as a spring pin. However, in this case, the space inside in the radial direction of the supporting member tends to be smaller compared to that of the mounting structure using the fastening member. In this example, the wireless communication apparatus 12 is placed in the inside space in the radial direction of the supporting member so it is preferable to employ the mounting structure using the fastening member from the aspect of securing large installation space for the wireless communication apparatus 12.

In this example, the stator 60 is joined and fastened to the inner peripheral surface of the fitting cylindrical portion 46 of the cover 45, and the rotor 61 is supported by and fastened to the hub 17 by way of the supporting member 67, and the stator 60 and the rotor 61 are placed coaxially. The outer peripheral surface of the rotor 61 (teeth 66) is opposite in the radial direction to the inner peripheral surface of the permanent magnet 63 of the stator 60 through a small gap. A radial gap type generator 11 is constructed by the stator 60 and the rotor 61 that are place in this way. When the rotor 61 rotates with the hub 17, electromotive force occurs due to the electromagnetic induction action of each coil 65. That is, as the hub 17 rotates with the wheel, the generator 11 generates electricity. In this example, the concentricity of the supporting member 67 with respect to the hub 17 is high and the concentricity of the rotor 61 with respect to the supporting member 67 is high as well, the radial gap between the rotor 61 and the stator 60 becomes small and the electric power generation capacity of the generator 11 becomes higher.

The wireless communication apparatus 12 comprises a wireless communication circuit (substrate) and an antenna, and wirelessly communicates with the calculation apparatus 59 that is installed on the vehicle body 7 side. In this example, the wireless communication apparatus 12 is able to transmit and receive signals with the calculation apparatus 59. The wireless communication apparatus 12 is placed in a space that exists on the inward in the axial direction of the hub 17 where the steel material constituting the hub 17 does not exist between the wireless communication apparatus 12 and the calculation apparatus 59, and it is prevented that the wireless communication performance by the wireless communication apparatus 12 deteriorates due to the steel material of the hub 17. However, as explained above, it is required to place the generator 11 in the space that exists on the inward in the axial direction of the hub 17. Therefore, the wireless communication apparatus 12 is placed inside in the radial direction of the fixed cylindrical portion 68 of the supporting member 67 in a state where it is attached to a rectifier circuit 79. In this manner, as the wireless communication apparatus 12 and the generator 11 are placed to be superimposed in the radial direction, the increase in the dimension in the axial direction of the rolling bearing unit 1 for supporting wheel due to installation of the generator 11 and the wireless communication apparatus 12 is suppressed to a minimum.

The rectifier circuit 79 comprises a substantially disc-shaped circuit body 80 having a slightly smaller outer diameter than the inner diameter of the fixed cylindrical portion 68, and a plurality of leg portions 81. The plurality of leg portions 81 are connected to the circuit body 80 with a plurality of connecting bolts 82. The rectifier circuit 79 is attached to the supporting member 67 by screwing each of the tip end portions of the leg portions 81 into the installation holes 75 of the bottom portion 69 of the supporting member 67. The wireless communication apparatus 12 is supported by the hub 17 by way of the rectifier circuit 79 and the supporting member 67. More specifically, the wireless communication apparatus 12 is attached to the inside surface in the axial direction of the circuit body 80 of the rectifier circuit 79. The antenna of the wireless communication apparatus 12 closely oppose in the axial direction with respect to the bottom plate portion 47 made of resin having a radio wave transmitting property. Therefore, the wireless signals that come in and come out the antenna of the wireless communication apparatus 12 are effectively prevented not to be blocked by the steel material of the hub 17 and the cover 45, and high efficiency in wirelessly communication between the wireless communication apparatus 12 and the calculation apparatus 59 is secured.

The battery 13 electrically connects to the generator 11 via the wiring 57 and the rectifier circuit 79. The rectifier circuit 79 comprises a rectifier circuit portion for converting the AC voltage that was generated by the generator 11 into the DC voltage, a charge and discharge control circuit portion, and a voltage control circuit unit that maintains the output voltage at a certain level.

In the present invention, it is also possible to convert the electric power that is generated by the generator into DC voltage without going through the battery and adjust the voltage to a certain level to supply electric power to a sensor and the like. Further, when the amount of the electric power generated by the generator is sufficient to operate a sensor and the like, it is possible to supply excess electric power to the battery and charge this battery.

The interface circuit 14 aggregates the output signals of the sensors 58a, 58b that are installed on the wheel side and converts into suitable signals to transmits the signals to the wireless communication apparatus 12 via the wiring 57.

The connector 15 comprises a power output terminal for supplying electric power to the sensors 58a, 58b that are provided on the wheel side, and a signal input terminal for inputting the output signals of the sensors 58a, 58b. The power output terminal of the connector 15 is connected to the battery 13, and the signal input terminal of the connector 15 is connected to the wireless communication apparatus 12 via the interface circuit 14.

The battery 13, the interface circuit 14, and the connector 15 are supported by and fastened to the inside of the outer recessed portion 32 by way of a mounting member 83. The mounting member 83 comprises an annular support ring portion 84 and a plurality of support cylindrical portions 85 that protrude inward in the axial direction from the inside surface in the axial direction of the support ring portion 84. Further, on the tip end portion of the support cylindrical portion 85, the interface circuit 14 is fixed with a connecting bolt 86 in a state where the interface circuit 14 is separated in the axial direction. The mounting member 83 is supported inside the outer recessed portion 32 by fitting (pressure fitting) the support ring portion 84 inside the outside end portion in the axial direction of the inner peripheral surface of the outer recessed portion 32 (the inner peripheral surface of the positioning cylindrical portion 41).

The connector 15 is attached to the inside in the radial direction of the support ring portion 84 of the mounting member 83. The connector 15 is located in the inside of the wheel center hole 49 in a state where the wheel 3 is joined and fastened to the rolling bearing unit 1 for supporting wheel.

As illustrated in FIG. 3, the tire-side sensor 58a and the wheel-side sensor 58b that are the sensors to be provided on the wheel side are attached to a wheel. The tire-side sensor 58a is directly provided inside the tire 2. The tire-side sensor 58a is constructed only by a wear sensor, a tire strain sensor, a temperature sensor and the like that are required to be directly provided on the tire 2 in order to measure the state quantity of the tire 2 from the aspect of suppressing the cost for changing tires. The wheel-side sensor 58b is provided on the rim portion 54 of the wheel 3. The wheel-side sensor 58b is constructed by a pneumatic sensor, a wheel strain sensor, an acceleration sensor and the like for measuring the state quantity that is measurable without installing on the tire 2. The tire-side sensor 58a, the wheel-side sensor 58b, and the connector 15 are connected by a wiring 88 that is placed along the inside surface in the axial direction of the disc portion 53 of the wheel 3.

In the rolling bearing unit 1 for supporting wheel of this example, of the bearing portion 10, the hub 17 which is a rotating ring rotates when the wheel (tire 2 and wheel 3) rotates as the vehicle travels. The rotor 61 that is supported by and fastened to the inside end portion in the axial direction of the hub 17 relatively rotates with respect to the stator 60 that is supported by and fastened to the outer ring 16 which is a stationary ring. Due to this, the generator 11 comprising the stator 60 and the rotor 61 generates electricity. The AC voltage that is generated by the generator 11 is sent to the battery 13 via the wiring 57. The electric power stored in the battery 13 is supplied to the tire-side sensor 58a that is provided on the tire 2 and the wheel-side sensor 58b that is provided on the wheel 3 via the connector 15. The tire-side sensor 58a and the wheel-side sensor 58b detects the state quantity of the tire 2 and the wheel 3, that is, the sensors detect the tire pressure, strain of tire or wheel, the vertical force, acceleration, temperature, etc. The electric power stored in the battery 13 is also supplied to the wireless communication apparatus 12 and interface circuit 14.

The output signals of the tire-side sensor 58a and the wheel-side sensor 58b are transmitted to the connector 15 via a wiring 88, and they are further transmitted to the wireless communication apparatus 12 via the interface circuit 14. The output signals of the tire-side sensor 58a and the wheel-side sensor 58b are wirelessly transmitted to the calculation apparatus 59 that is placed on the vehicle body 7 side via the bottom plate portion 47 of the cover 45. The calculation apparatus 59 receives the state quantities of the tire 2 and the wheel 3 which are the output signal of the tire-side sensor 58a and the wheel-side sensor 58b, and uses these state quantities to such as active safety technology of the vehicle.

The rolling bearing unit 1 for supporting wheel is able to receive signals regarding the travelling speed of the vehicle from the calculation apparatus 59 by an antenna of the wireless communication apparatus 12. In this case, only when the travelling speed exceeds a certain value where it can be determined that the vehicle is in the traveling state, electric power is supplied to the tire-side sensor 58a and the wheel-side sensor 58b, and when the travelling speed is below a certain value where it can be determined that the vehicle is substantially not in motion, electric power supply can be stopped. Due to such control of electric power supply, needless electric power consumption of the battery 13 is prevented.

The rolling bearing unit 1 for supporting wheel, while suppressing the increase in the axial dimension due to the installation of the generator 11 and the wireless communication apparatus 12 to a minimum, it is possible to supply sufficient power supply to the sensors 58a, 58b provided on the wheel side, and it is also possible to wirelessly transmit the output signals of the sensors 58a, 58b that rotate together with the wheel to the calculation apparatus 59 on the vehicle body side. That is, electric power is generated by using the relative rotation of the outer ring 16 and the hub 17, and from the aspect of securing the wireless communication function of the wireless communication apparatus 12, the generator 11 and the wireless communication apparatus 12 are placed in the space that exists inward in the axial direction of the hub 17, but the size of this space is limited. In the rolling bearing unit 1 for supporting wheel of this example, the generator 11 and the wireless communication apparatus 12 are efficiently placed so as to be superimposed in the radial direction by the bottomed cylindrical supporting member 67 that is fixed to the inside of the inner recessed portion 29 of the hub 17, and the increase in the axial dimension of the rolling bearing unit 1 for supporting wheel due to the installation of the generator 11 and the wireless communication apparatus 12 is suppressed to a minimum. Due to such construction, it is also possible to use a larger generator 11 having a large volume and a high power generation performance.

The rotor 61 which is an armature comprising the coil 65 is supported by the hub 17 by way of the supporting member 67. The supporting member 67 comprises an insertion hole 73 in the bottom portion 69, and the partition wall section 33 comprises a through-hole 34. The wiring 57 that is connected to the rotor 61 is pulled out to the outside in the axial direction through the insertion hole 73 and the through-hole 34. So it is possible to supply the electromotive force that was generated in the coil 65 to the sensors 58a, 58b that are provided on the wheel side by the wiring 57. The wireless communication apparatus 12 is supported by the hub 17 by way of the rectifier circuit 79 and the supporting member 67. Through the insertion hole 73 of the supporting member 67 and the through-hole 34 of the partition wall section 33, the wiring 57 that is connected to the wireless communication apparatus 12 is pulled out to the outside in the axial direction, and the output signals of the sensors 58a, 58b that rotates together with the wheel can be transmitted to the wireless communication apparatus 12 by the wiring 57.

The guide surface section 70 that is provided on the outer peripheral surface of the supporting member 67 is fitted and fixed inside the fitting surface section 30 that is provided on the inner peripheral surface of the inner recessed portion 29 without looseness, so that the concentricity of the supporting member 67 with respect to the hub 17 is increased, and the concentricity of the rotor 61 with respect to the supporting member 67 is also increased. Due to this, the radial gap between the rotor 61 and the stator 60 becomes small and the electric power generation capacity of the generator 11 is increased. Therefore, while suppressing the increase in the axial dimension due to the installation of the generator 11 and the wireless communication apparatus 12 to a minimum, it is possible to supply sufficient electric power to the sensors 58a, 58b that are provided on the wheel side and it is also possible to wirelessly transmit the output signals of the sensors 58a, 58b that rotates with the wheel to the calculation apparatus 59 on the vehicle body side.

In this example, the generator 11 and the wireless communication apparatus 12 are not placed on the outside in the radial direction of the hub 17, it is possible to fix an encoder of the rotational speed detection apparatus that is used for such as ABS on the outer peripheral surface of the inner ring 23 of the hub 17.

In this example, it is possible to supply electric power that is generated by the generator 11 to the sensors 58a, 58b that are placed on the wheel side, and it is also possible to wirelessly transmit the output signals of the sensors 58a, 58b that rotate together with the wheel from the wireless communication apparatus 12 to the calculation apparatus 59 that is provided on the vehicle body 7 side, so there is no need for handling a harness when attaching the rolling bearing unit 1 for supporting wheel to the knuckle 6, and a good assembling workability is ensured.

When changing the tire 2, the generator 11, the wireless communication apparatus 12, the battery 13, the interface circuit 14, and the connector 15 that are placed in the rolling bearing unit 1 for supporting wheel can be continuously used. That is, only the tire-side sensor 58a that is placed on the tire 2 has to be replaced. Therefore, the cost for changing tires can be reduced compared to the case in which the generator etc. are placed inside the tire.

Further, when performing tire rotation (changing the positions of tires) for preventing uneven wear, the mounting position of the rolling bearing unit 1 for supporting wheel itself having a wireless communication function stays the same, it is also prevented that the signal received by the calculation apparatus 59 on the vehicle body 7 side cannot be distinguished which tire the signal is from.

### [Reference Sings List]

- 1: Rolling bearing unit for supporting wheel
- 2: Tire
- 3: Wheel
- 4: Disc brake device
- 5: Rotor
- 6: Knuckle
- 7: Vehicle body
- 8: Upper arm
- 9: Lower arm
- 10: Bearing portion
- 11: Generator
- 12: Wireless communication apparatus
- 13: Battery
- 14: Interface circuit
- 15: Connector
- 16: Outer ring
- 17: Hub
- 18: Balls
- 19a, 19b: Outer ring raceway
- 20: Stationary flange
- 21: Installation holes
- 22: Hub wheel
- 23: Inner ring
- 24a, 24b: Inner ring raceway
- 25: Small diameter stepped portion
- 26: Crimped portion
- 27: Rotating side flange
- 28: Coupling holes
- 29: Inner recessed portion
- 30: Fitting surface section
- 31: Bottom surface
- 32: Outer recessed portion
- 33: Partition wall section
- 34: Through-hole
- 35: Cage
- 36: Support hole
- 37: Knuckle-side installation holes
- 38: Fastening member
- 39: Rotor center hole
- 40: Wheel center hole
- 41: Positioning cylindrical portion
- 42: Wheel coupling holes
- 43: Rotor coupling holes
- 44: Fastening member
- 45: Cover
- 46: Fitting cylindrical portion
- 47: Bottom plate portion
- 48: Bolt
- 49: Small diameter portion
- 50: Stepped surface
- 51: Inward flange
- 52: Small cylindrical portion
- 53: Disc portion
- 54: Rim portion
- 55: Hat portion
- 56: Sliding portion
- 57: Wiring
- 58a: Tire-side sensor
- 58b: Wheel-side sensor
- 59: Calculation apparatus
- 60: Stator
- 61: Rotor
- 62: Stator core
- 63: Permanent magnet
- 64: Rotor core
- 65: Coil
- 66: Teeth
- 67: Supporting member
- 68: Fixed cylindrical portion
- 69: Bottom portion
- 70: Guide surface section
- 71: Outward flange
- 72: Flange-side coupling holes
- 73: Insertion hole
- 74: Stepped hole
- 75: Installation holes
- 76: Mounting bolt
- 77: Fastening member
- 78: Rotor-core-side coupling holes
- 79: Rectifier circuit
- 80: Circuit body
- 81: Leg portion
- 82: Connecting bolt
- 83: Mounting member
- 84: Support ring portion
- 85: Support cylindrical portion
- 86: Connecting bolt
- 88: Wiring

## Claims

1. A rolling bearing unit (1) for supporting wheel, comprising:
a bearing portion (10) comprising:
an outer ring (16) having an outer ring raceway (19a, 19b) in an inner peripheral surface thereof, and supported by a suspension so as not to rotate;
a hub (17) placed inside in a radial direction of the outer ring (16) so as to be coaxial with the outer ring (16), having an inner ring raceway (24a, 24b) in a portion of an outer peripheral surface thereof that is opposite to the outer ring raceway (19a, 19b), and rotating with a wheel;
a plurality of rolling elements (18) placed between the outer ring raceway (19a, 19b) and the inner ring raceway (24a, 24b) so as to be able to roll freely;
a generator (11) having a stator (60) and a rotor (61) that are placed so as to be coaxial with each other and generates electricity based on a relative rotation of the stator (60) and the rotor (61); and
a wireless communication apparatus (12) to perform wireless communication with an electronic apparatus (59) that is placed on a vehicle body side;
whereby the hub (17) is provided with an inner recessed portion (29) on an inner diameter side of an inside portion in an axial direction thereof and a through-hole (34) passing through a center portion thereof in the axial direction;
a hollow cylindrical supporting member (67) is supported and fixed inside the inner recessed portion (29),
a bottom portion (69) covering an outside end opening in the axial direction of the fixed cylindrical portion (68), an outside end surface in the axial direction, an insertion hole (73) provided in a portion of the bottom portion (69) that coincides with the through-hole (34) in a state where the supporting member (67) is supported by and fixed to the hub (17) and passing through the bottom portion (69) in the axial direction, and a stepped hole (74) provided in a position of the bottom portion (69) that coincides with the bottom surface (31) of the inner recessed portion (29) which is deviated from the through-hole (34) in a state where the supporting member (67) is supported by and fixed to the hub (17) and passing through the bottom portion (69) in the axial direction;
the outside end surface in the axial direction comes in contact with the bottom surface (31) of the inner recessed portion (29), the insertion hole (73) coincides with the through-hole (34), and a mounting bolt (76) that passes through the stepped hole (74) is screwed in and fastened to the bottom surface (31);
the rotor (61) is constructed by an armature comprising a coil (65), and is fixed to an inside portion in the axial direction of the supporting member (67) so as to be coaxial with the supporting member (67); and
the wireless communication apparatus (12) is supported by the hub (17), and is placed inside in the radial direction of the supporting member (67); **characterised in that** the inner recessed portion (29) comprises a cylindrical fitting surface section (30) coaxial with a center axis of the hub (17) on an inner peripheral surface thereof, and an opening of the through-hole (34) on a bottom surface (31) thereof; **in that** the hollow cylindrical supporting member (67) has a fixed cylindrical portion (68) with a stepped cylindrical shape; **in that** a cylindrical guide surface section (70) is provided on an outer peripheral surface of the fixed cylindrical portion (68); and **in that** the guide surface section (70) is fitted to the fitting surface section (30).

2. The rolling bearing unit (1) for supporting wheel according to claim 1, wherein the hollow cylindrical supporting member (67) is provided with installation holes (75) in positions of the bottom portion that coincide with the bottom surface (31) of the inner recessed portion (29) which is deviated from the through-hole (34) in a state where the supporting member (67) is supported by and fixed to the hub (17) and passing through the bottom portion (69) in the axial direction, the wireless communication apparatus (12) is provided with a plurality of leg portions (81), and tip end portions of the leg portions (81) are screwed into the installation holes (75).

3. The rolling bearing unit (1) for supporting wheel according to claim 1 or 2, wherein the rotor (61) is fixed with a plurality of fastening members (77).

4. The rolling bearing unit (1) for supporting wheel according to any one of claims 1 through 3, wherein the hub (17) is provided with an outer recessed portion (32) on an inner diameter side of an outside portion in the axial direction, and a partition wall section (33) between the outer recessed portion (32) and the inner recessed portion (29), and the through-hole (34) is provided on the partition wall section (33).

5. The rolling bearing unit (1) for supporting wheel according to any one of claims 1 to 4, wherein a cover (45) covering an inside end opening in the axial direction of the outer ring (16), and at least a portion of the cover (45) that is opposite to the wireless communication apparatus (12) in the axial direction is formed by a material having a radio wave transmitting property.

6. The rolling bearing unit (1) for supporting wheel according to any of claims 1 through 5, wherein the stator (60) and the rotor (61) are opposite to each other via an air gap in the radial direction.

## Patentansprüche

1. Wälzlagereinheit (1) zum Stützen eines Rads, umfassend:
ein Lagerteil (10), umfassend:
einen Außenring (16) mit einer Außenringlaufbahn (19a, 19b) in einer inneren Umfangsfläche davon und von einer Aufhängung so getragen, dass er sich nicht dreht;
eine Nabe (17), die innerhalb in einer radialen Richtung des Außenrings (16) so angeordnet ist, dass sie mit dem Außenring (16) koaxial ist, eine Innenringlaufbahn (24a, 24b) in einem Abschnitt einer äußeren Umfangsfläche davon aufweist, die der Außenringlaufbahn (19a, 19b) gegenüberliegt, und sich mit einem Rad dreht;
eine Vielzahl von Wälzkörpern (18), die zwischen der Außenringlaufbahn (19a, 19b) und der Innenringlaufbahn (24a, 24b) so angeordnet sind, dass sie frei rollen können;
einen Generator (11) mit einem Stator (60) und einem Rotor (61), die so angeordnet sind, dass sie koaxial zueinander sind, und der Elektrizität basierend auf einer relativen Drehung des Stators (60) und des Rotors (61) erzeugt; und
ein drahtloses Kommunikationsgerät (12) zur Durchführung von drahtloser Kommunikation mit einem elektronischen Gerät (59), das an einer Fahrzeugkarosserieseite angeordnet ist;
wodurch
die Nabe (17) mit einem inneren vertieften Abschnitt (29) auf einer Innendurchmesserseite eines Innenabschnitts in einer axialen Richtung davon und einem Durchgangsloch (34) versehen ist, das durch einen Mittelabschnitt davon in der axialen Richtung verläuft;
ein hohles zylindrisches Stützelement (67) innerhalb des inneren vertieften Abschnitts (29) gestützt und befestigt ist,
ein Bodenteil (69) eine äußere Endöffnung in axialer Richtung des festen zylindrischen Teils (68) abdeckt,
eine äußere Endfläche in der axialen Richtung, ein Einsetzloch (73), das in einem Abschnitt des Bodenabschnitts (69) vorgesehen ist, der mit dem Durchgangsloch (34) in einem Zustand zusammenfällt, in dem das Stützelement (67) von der Nabe (17) gestützt und daran befestigt ist, und das durch den Bodenabschnitt (69) in der axialen Richtung hindurchgeht, und ein gestuftes Loch (74), das in einer Position des Bodenabschnitts (69) vorgesehen ist, die mit der Bodenfläche (31) des inneren vertieften Abschnitts (29) zusammenfällt, das von dem Durchgangsloch (34) in einem Zustand abweicht, in dem das Stützelement (67) von der Nabe (17) gestützt und an dieser befestigt ist, und durch den Bodenabschnitt (69) in der axialen Richtung hindurchgeht;
die äußere Endfläche in axialer Richtung mit der Bodenfläche (31) des inneren vertieften Abschnitts (29) in Kontakt kommt, das Einführungsloch (73) mit dem Durchgangsloch (34) zusammenfällt und ein Befestigungsbolzen (76), der durch das gestufte Loch (74) hindurchgeht, eingeschraubt und an der Bodenfläche (31) befestigt ist;
der Rotor (61) durch einen Anker, der eine Spule (65) umfasst, konstruiert ist und an einem inneren Abschnitt in axialer Richtung des Stützelements (67) so befestigt ist, dass er mit dem Stützelement (67) koaxial ist; und
das drahtlose Kommunikationsgerät (12) von der Nabe (17) getragen wird und in der radialen Richtung im Inneren des Stützelements (67) angeordnet ist; **dadurch gekennzeichnet, dass** der innere vertiefte Abschnitt (29) einen zylindrischen Passflächenabschnitt (30) koaxial zu einer Mittelachse der Nabe (17) auf einer inneren Umfangsfläche davon und eine Öffnung des Durchgangslochs (34) auf einer Bodenfläche (31) davon umfasst; dass das hohle zylindrische Stützelement (67) einen feststehenden zylindrischen Abschnitt (68) mit einer abgestuften zylindrischen Form aufweist; dass ein zylindrischer Führungsflächenabschnitt (70) an einer äußeren Umfangsfläche des feststehenden zylindrischen Abschnitts (68) vorgesehen ist; und dass der Führungsflächenabschnitt (70) an dem Passflächenabschnitt (30) angebracht ist.

2. Wälzlagereinheit (1) zum Stützen eines Rads nach Anspruch 1, wobei das hohle zylindrische Stützelement (67) mit Installationslöchern (75) an Positionen des Bodenabschnitts versehen ist, die mit der Bodenfläche (31) des inneren vertieften Abschnitts (29) übereinstimmen, die von dem Durchgangsloch (34) in einem Zustand abweichen, in dem das Stützelement (67) von der Nabe (17) gestützt und daran befestigt ist, und durch den Bodenabschnitt (69) in der axialen Richtung hindurchgeht, die drahtlose Kommunikationsvorrichtung (12) mit einer Vielzahl von Schenkelabschnitten (81) versehen ist und Spitzenendabschnitte der Schenkelabschnitte (81) in die Installationslöcher (75) geschraubt sind.

3. Wälzlagereinheit (1) zum Stützen eines Rads nach Anspruch 1 oder 2, wobei der Rotor (61) mit einer Vielzahl von Befestigungselementen (77) befestigt ist.

4. Wälzlagereinheit (1) zum Stützen eines Rads nach einem der Ansprüche 1 bis 3, wobei die Nabe (17) mit einem äußeren vertieften Abschnitt (32) auf einer Innendurchmesserseite eines äußeren Abschnitts in der axialen Richtung und einem Trennwandabschnitt (33) zwischen dem äußeren vertieften Abschnitt (32) und dem inneren vertieften Abschnitt (29) versehen ist und das Durchgangsloch (34) an dem Trennwandabschnitt (33) vorgesehen ist.

5. Wälzlagereinheit (1) zum Stützen eines Rads nach einem der Ansprüche 1 bis 4, wobei eine Abdeckung (45), die eine innere Endöffnung in der axialen Richtung des Außenrings (16) abdeckt, und mindestens ein Teil der Abdeckung (45), der dem drahtlosen Kommunikationsgerät (12) in der axialen Richtung gegenüberliegt, aus einem Material gebildet sind, das eine Funkwellen-Übertragungseigenschaft aufweist.

6. Wälzlagereinheit (1) zum Stützen eines Rads nach einem der Ansprüche 1 bis 5, wobei sich der Stator (60) und der Rotor (61) über einem Luftspalt in der radialen Richtung gegenüberliegen.

## Revendications

1. Unité de palier à roulement (1) pour supporter une roue, comprenant :
une partie de palier (10) comprenant :
une bague externe (16) qui comporte un chemin de roulement de bague externe (19a, 19b) dans une surface périphérique interne de celle-ci, et qui est supportée par une suspension de manière à ne pas tourner ;
un moyeu (17) qui est placé à l'intérieur dans une direction radiale de la bague externe (16) de manière à être coaxial à la bague externe (16), qui comporte un chemin de roulement de bague interne (24a, 24b) dans une partie d'une surface périphérique externe de celui-ci qui est opposé au chemin de roulement de bague externe (19a, 19b), et qui peut tourner avec une roue ;
une pluralité d'éléments de roulement (18) qui sont placés entre le chemin de roulement de bague externe (19a, 19b) et le chemin de roulement de bague interne (24a, 24b) de manière à pouvoir rouler librement ;
un générateur (11) qui comporte un stator (60) et un rotor (61) qui sont placés de manière à être coaxiaux l'un à l'autre et qui génère de l'électricité sur la base d'une rotation relative du stator (60) et du rotor (61) ; et
un appareil de communication sans fil (12) pour réaliser une communication sans fil avec un appareil électronique (59) qui est placé sur un côté de carrosserie de véhicule ;
moyennant quoi :
le moyeu (17) est muni d'une partie renfoncée interne (29) sur un côté de diamètre interne d'une partie intérieure dans sa direction axiale et d'un trou traversant (34) qui traverse une partie centrale de celui-ci dans la direction axiale ;
un élément de support cylindrique creux (67) est supporté et fixé à l'intérieur de la partie renfoncée interne (29),
une partie de fond (69) recouvre une ouverture d'extrémité extérieure dans la direction axiale de la partie cylindrique fixe (68),
une surface d'extrémité extérieure dans la direction axiale, un trou d'insertion (73) prévu dans une partie de la partie de fond (69) qui coïncide avec le trou traversant (34) dans un état dans lequel l'élément de support (67) est supporté par et fixé sur le moyeu (17), et traverse la partie de fond (69) dans la direction axiale, et un trou étagé (74) prévu en une position de la partie de fond (69) qui coïncide avec la surface de fond (31) de la partie renfoncée interne (29), lequel est dévié par rapport au trou traversant (34) dans un état dans lequel l'élément de support (67) est supporté par et fixé sur le moyeu (17), et traverse la partie de fond (69) dans la direction axiale ;
la surface d'extrémité extérieure dans la direction axiale entre en contact avec la surface de fond (31) de la partie renfoncée interne (29), le trou d'insertion (73) coïncide avec le trou traversant (34), et un boulon de montage (76) qui traverse le trou étagé (74) est vissé dans et assemblé sur la surface de fond (31) ;
le rotor (61) est constitué par une armature qui comprend une bobine (65) et est fixé sur une partie intérieure dans la direction axiale de l'élément de support (67) de manière à être coaxial à l'élément de support (67) ; et
l'appareil de communication sans fil (12) est supporté par le moyeu (17) et est placé à l'intérieur dans la direction radiale de l'élément de support (67) ; **caractérisée en ce que** la partie renfoncée interne (29) comprend une section de surface d'ajustement cylindrique (30) qui est coaxiale à un axe central du moyeu (17) sur une surface périphérique interne de celle-ci, et une ouverture du trou traversant (34) sur une surface de fond (31) de celle-ci ; **en ce que** l'élément de support cylindrique creux (67) comporte une partie cylindrique fixe (68) qui présente une forme cylindrique étagée ; **en ce que** une section de surface de guidage cylindrique (70) est prévue sur une surface périphérique externe de la partie cylindrique fixe (68) ; et **en ce que** la section de surface de guidage (70) est ajustée par rapport à la section de surface d'ajustement (30).

2. Unité de palier à roulement (1) pour supporter une roue selon la revendication 1, dans laquelle l'élément de support cylindrique creux (67) est muni de trous d'installation (75) en des positions de la partie de fond qui coïncident avec la surface de fond (31) de la partie renfoncée interne (29), lesquels sont déviés par rapport au trou traversant (34) dans un état dans lequel l'élément de support (67) est supporté par et fixé sur le moyeu (17), et traversant la partie de fond (69) dans la direction axiale, l'appareil de communication sans fil (12) est muni d'une pluralité de parties de jambage (81), et des parties d'extrémité de pointe des parties de jambage (81) sont vissées dans les trous d'installation (75).

3. Unité de palier à roulement (1) pour supporter une roue selon la revendication 1 ou 2, dans laquelle le rotor (61) est fixé avec une pluralité d'éléments d'assemblage (77).

4. Unité de palier à roulement (1) pour supporter une roue selon l'une quelconque des revendications 1 à 3, dans laquelle le moyeu (17) est muni d'une partie renfoncée externe (32) sur un côté de diamètre interne d'une partie extérieure dans la direction axiale, et d'une section de paroi de partition (33) entre la partie renfoncée externe (32) et la partie évidée interne (29), et le trou traversant (34) est prévu sur la section de paroi de partition (33).

5. Unité de palier à roulement (1) pour supporter une roue selon l'une quelconque des revendications 1 à 4, dans laquelle un moyen de recouvrement (45) recouvrant une ouverture d'extrémité intérieure dans la direction axiale de la bague externe (16), et au moins une partie du moyen de recouvrement (45) qui est opposée à l'appareil de communication sans fil (12) dans la direction axiale est formée par un matériau qui présente une propriété de transmission des ondes radio.

6. Unité de palier à roulement (1) pour supporter une roue selon l'une quelconque des revendications 1 à 5, dans laquelle le stator (60) et le rotor (61) sont opposés l'un à l'autre via un entrefer dans la direction radiale.
